# EUROPEAN PATENT SPECIFICATION

(11) **EP 3 342 023 B1**
(45) Date of publication and mention of the grant of the patent: **22.09.2021**
(21) Application number: 15754252.3
(22) Date of filing: 27.08.2015
(51) Int. Cl.: H02J 9/06

(54) **A SOURCE CHANGE OVER SYSTEM HAVING DISTRIBUTED ELECTRICAL INTERLOCKING**
QUELLENWECHSELSYSTEM MIT VERTEILTER ELEKTRISCHER VERRIEGELUNG
SYSTÈME DE CHANGEMENT DE SOURCE AYANT UN VERROUILLAGE MUTUEL ÉLECTRIQUE DISTRIBUÉ

(43) Date of publication of application: 04.07.2018
(73) Proprietor: Schneider Electric Industries SAS, 92500 Rueil-Malmaison (FR)
(72) Inventor: PRABHAKARAN, Prajith, Bangalore Karnataka 560067 (IN); MYSORE, Thejas, Bangalore Karnataka 560067 (IN)
(74) Representative: Manitz Finsterwald Patent- und Rechtsanwaltspartnerschaft mbB
(86) International application number: PCT/EP2015/069691
(87) International publication number: WO 2017/032426

(56) References cited:
- US-A- 3 811 050
- US-A1- 2007 114 958
- US-A1- 2007 114 958
- US-A1- 2009 009 001
- US-B1- 6 501 196
- US-B1- 6 501 196

## Description

### FIELD OF THE INVENTION

The present invention generally relates to electrical interlock system in an Automatic Transfer Switch (ATS) system. In particular, the present invention relates to an ATS system having an electrical interlock system using a token exchange method.

### BACKGROUND OF THE INVENTION

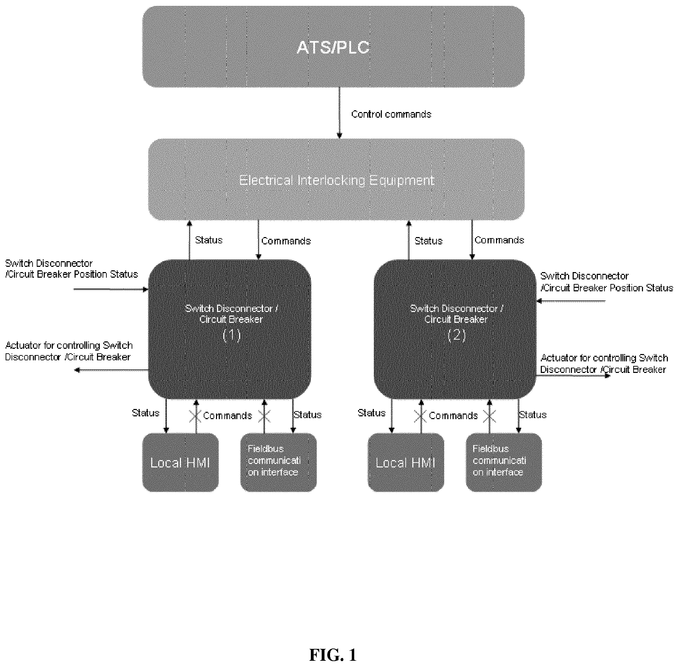

Typically there are two types of architecture for source-change over system with electrical interlock.
Architecture type 1: Separate equipment for Source change over functionality and electrical interlock (shown in FIG. 1).

In this architecture, electrical interlocking between two breaker systems is achieved by dedicated electrical equipment. This equipment takes the full control for the two breaker systems and allows ATS (Automatic Transfer Switch) to control breaker system based on the predefined logic. Normally dedicated actuators are used to open and close circuit breaker/ switch dis-connector. Full control of these actuators is taken by electrical interlocking device to ensure electrical interlocking between two systems. This also ensures not to allow any other interface in the system to control the breaker/switch dis-connector.

However, the disadvantages of the Architecture type 1 are:
1) Complexity of installation and wiring due to separate electrical interlocking device
2) Cost of overall solution
3) Less flexibility in the system to control breaker or switch dis-connector
4) Configuration difficulties
5) Actuator of the breaker system is controlled by an external device making it a less reliable system

Architecture 2: Source change over equipment with embedded Electrical interlock intelligence.

In this architecture, electrical interlocking between two breaker systems is achieved by intelligence embedded in ATS equipment. ATS with embedded electrical interlocking mechanism takes the full control for the two breaker systems and controls breaker system based on the predefined logic. Normally dedicated actuators are used to open and close circuit breaker/ switch dis-connector. Full control of these actuators is taken by ATS device to ensure electrical interlocking between two systems and preventing any other interface in the system to control the breaker/switch dis-connector.

Architecture type 2 also has several disadvantages such as:
1) Less flexibility in the system to control breaker or switch dis-connector
2) Configuration difficulties
3) Actuator of the breaker system is controlled by an external device making it a less reliable system.

US 6 501 196 B1 discloses an AC transfer switch in which plural interconnected circuits A, B, C may selectively guide electric power to an electric load.

US 2007/0114958 A1 discloses an automatic transfer switch apparatus in which the mechanical drive of a switch is commanded by solid state control relays that may be commanded from a command station.

### SUMMARY OF THE INVENTION

In view of the above discussion, it may be realized that there exists a need to provide a source change over system with improved distributed electrical interlocking.
The main object of the present invention is to provide an electrical interlocking for a source change over system with good scalability and reliability.

This object is accomplished by the features of claim 1.

A source change over system has distributed electrical interlocking. The source change over system includes an automatic transfer switch (ATS) for issuing control commands, a plurality of switch disconnectors/circuit breakers communicatively coupled with the automatic transfer switch for tripping actuators for break operation based on the control commands, a plurality of Human Machine Interfaces (HMIs), field bus communication interfaces and input output interfaces connected with each of the plurality of switch disconnectors/circuit breakers, wherein the plurality of switch disconnectors/ circuit breakers are interconnected by one or more communication channels and have an electrical interlock control mechanism adapted to use a token exchange method.

The plurality of switch disconnectors/ circuit breakers may take decisions of token exchange based on: the switch disconnector/ circuit breaker that intends to close the breaker requires to possess an electrical interlocking token therewith, the interlocking token is possessed by only one switch disconnector/ circuit breaker at a time or the interlocking token is possessed by none of the switch disconnectors/ circuit breakers, if a switch disconnector/ circuit breaker intends to close the breaker and does not possess the electrical interlocking token therewith a request is sent to other switch disconnectors/ circuit breaker to release the interlocking token thereto that requires the token for closing the breaker, and a switch disconnector/ circuit breaker releases the token to other switch disconnector/ circuit breaker if and only if the breaker of the releasing switch disconnector/ circuit breaker is in open and not in trip state and no other token request is pending.

The communication channels interconnecting the plurality of switch disconnectors/ circuit breaker are an input output interface.

The automatic transfer switch may be a programmable logic.

It is to be understood that both the foregoing general description and the following detailed description of the present embodiments of the invention are intended to provide an overview or framework for understanding the nature and character of the invention as it is claimed. The accompanying drawings are included to provide a further understanding of the invention and are incorporated into and constitute a part of this specification. The drawings illustrate various embodiments of the invention and together with the description serve to explain the principles and operation of the invention.

### BRIEF DESCRIPTION OF THE DRAWINGS

The above-mentioned and other features and other advantages of the invention will be better understood and will become more apparent by referring to the exemplary embodiments of the invention, as illustrated in the accompanying drawings, wherein
FIG. 1 illustrates one existing architecture of source-change over system with electrical interlock as prior art;

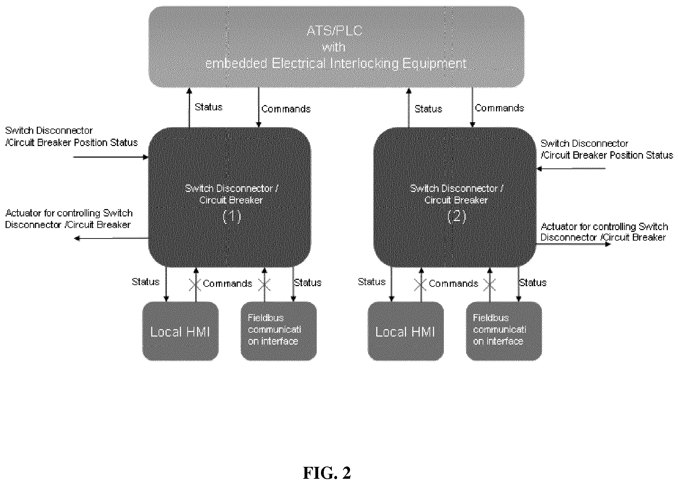

FIG. 2 illustrates another existing architecture of source-change over system with electrical interlock as prior art;
FIG. 3 illustrates a source change-over equipment with embedded electrical interlock with distributed intelligence according to one embodiment of the present invention; and
FIG. 4 is a flowchart illustrating how two system exchange interlocking token according to one embodiment of the present invention.

### DETAIL DESCRIPTION OF THE INVENTION

Reference will now be made to the exemplary embodiments of the invention, as illustrated in the accompanying drawings. Where ever possible same numerals will be used to refer to the same or like parts.

The present invention discloses a source change over system with an improved distributed electrical interlocking using token exchange method. The main inventive feature of the present invention compared to the earlier architectures is electrical interlocking intelligence of the system is with switch dis-connector or the breaker system. The intelligence is distributed in the breaker systems. The present invention allows any number of breakers to be connected with the ATS system. However, the ATS system of the present embodiment includes two breakers for easiness of explanation.

Advantage of the present invention is the flexibility in the breaker system. The ATS system according to the present invention can be controlled by any means of interface such as local HMI, field bus communication interface, IO interface and so forth. Still electrical interlock is ensured by additional intelligence embedded in the breaker system itself.

The present invention is more reliable compared to other architectures since end decision of controlling breaker/switch dis-connector is taken by mechanism in-built breaker/switch dis-connector. To achieve complete closed loop control system, actuator for controlling breaker/switch dis-connector and sensor for breaker /switch dis-connector are accessed through a single mechanism or intelligence. Mechanical latency is well managed in this solution, time delay between actual actuator activation and status change in the breaker /switch dis-connector can be easily manageable with the in-build mechanism.

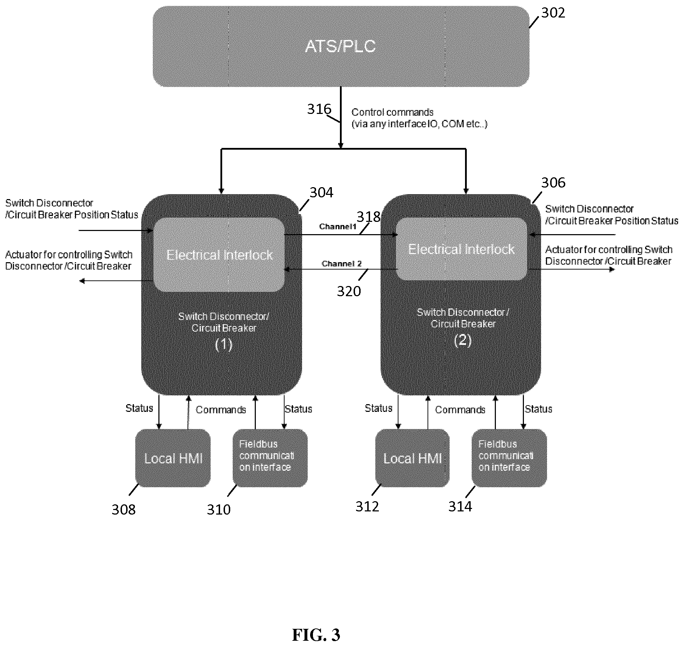

FIG. 3 illustrates a typical source change over system with two switch dis-connector/ breaker systems (304, 306) according to the one embodiment of the present invention. From here onwards system 1 (304) may be referred as normal source breaker system and system 2 (306) may be referred as replacement breaker system. Both the system has multiple interfaces for monitoring and controlling breaker system, for example, interface such as local HMI (308, 312), field bus communication interface (310, 314), IO interface and so forth.

The ATS system (302) can control this system via any of the preferred interface (316) of the user choice, normally IO interface or field bus communication. Since, the intelligence of the electrical interlock is distributed in both the systems. It is mandatory for the both breaker systems to communicate with each other.

In the present invention, it is achieved by two channels such as channel 1 (318) and channel 2 (320). Channel 1 sends information from breaker system 1 to breaker system 2 and channel 2 exchanges information from breaker system 2 to breaker system 1. These channels comprise an input output interface.

The present invention requires two channels only if channel 1 and 2 are managed using digital Input/output. If the present invention is implemented using communication bus, channel 1 and channel 2 may be considered as same channel.

Electrical interlocking between breaker systems is achieved by a token mechanism. Based on the availability of token, the breaker system takes decision to control breaker. In general, the token exchange follows the below rules:
1) The breaker system which wants to close the breaker need electrical interlocking token with it.
2) At a time, only one breaker system can have token or there can be a condition both does not have token.
3) If any breaker system want to close the breaker and does not have electrical interlocking token with it. One breaker system can request other breaker system to release the token to breaker system which requires the token if all the required conditions are met.
4) One breaker system can release the token to other breaker system if and only if breaker is open and not in trip state (for breaker with trip unit) or no other token request is in-progress from its own system.

Tokens are exchanged between two breaker systems via channel 1 and channel 2.

If breaker system 1 requires a token, then breaker system 1 sends a message 1 (Request for Token) via channel 1 to breaker system 2 requesting for the token. If all conditions of releasing token are met, the breaker system 2 sends a message 2 (Positive Acknowledgement for Token) through channel 2 to breaker system 1 confirming the release of the token. Otherwise if all conditions of releasing token are not met, the breaker system 2 sends a message 3 (Negative Acknowledgement for Token) through channel 2 for not releasing the token.

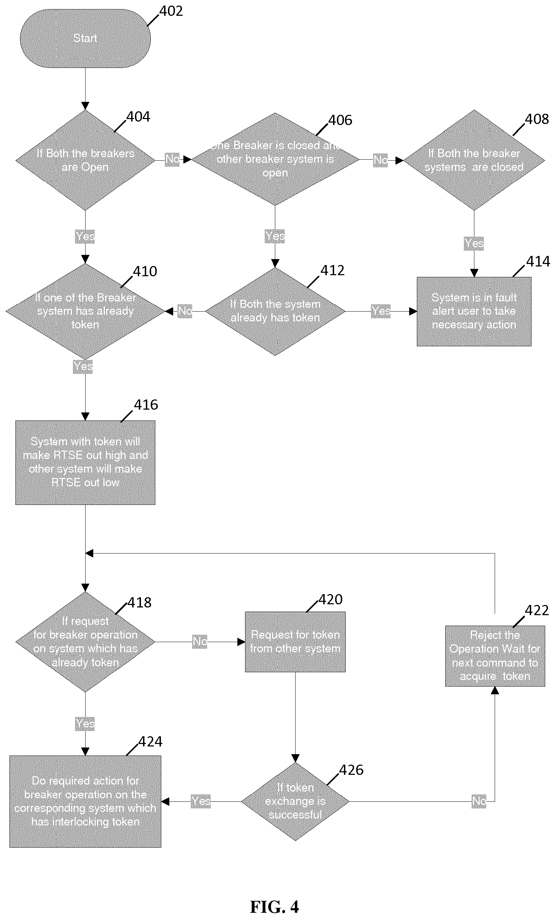

The below table explains the possible use cases (shown in FIG. 4) and token exchanges:

| | Use Case | Token Exchange |
|---|---|---|
| 1 | Initial (both breaker open, 404) | • Both system does not have token |
| 2 | Initial (One breaker closed and other is Open, 406) | • If Breaker system1 is closed and Breaker system 2 is open |
| | | • Breaker system 1 will acquire token automatically and by sending Message 1 (410, 416, 418, 424) |
| 3 | Initial (both breakers closed, 408) | • If BREAKER SYSTEM1 and BREAKER SYSTEM2 are closed |
| | | • Both BREAKER SYSTEM will try to acquire token and will fire fault condition (414) |
| 4 | Close cmd in Breaker BREAKER SYSTEM 1 | • To close breaker, breaker system needs token |
| | | • So BREAKER SYSTEM 1 will initiate request for token by sending Message 1 (420) and waits for 100ms for Message 2 or Message 3 if BREAKER SYSTEM 1 receives Message 2 (426) after 100ms BREAKER SYSTEM 1 will acquire token |
| | | • BREAKER SYSTEM1 will close breaker after getting token (424) |
| 5 | Simultaneous Close cmd on both BREAKER SYSTEM systems | • To close breaker, breaker system needs token |
| | | • So both breaker systems will initiate request for token by sending Message 1 on channel 1 and channel 2. |
| | | • Both the system will lose token and both BREAKER SYSTEMs will go to initial state. |
| 6 | Token is with BREAKER SYSTEM1 and BREAKER SYSTEM 1 is closed/ Tripped state and BREAKER SYSTEM 2 gets a close command | • To close breaker, breaker system needs token |
| | | • So BREAKER SYSTEM 2 will initiate request for token by sending Message 1 (420) via channel 2 if BREAKER SYSTEM 2 receives Message 3 after 100ms BREAKER SYSTEM 2 will not acquire token |
| | | • BREAKER SYSTEM 2 will reject close command since BREAKER SYSTEM2 does not get token (422) |
| 7 | Token is with BREAKER SYSTEM1 and BREAKER SYSTEM 1's breaker state is open state and BREAKER SYSTEM 2 gets a close command | • To close breaker, breaker system needs token |
| | | • So BREAKER SYSTEM 2 will initiate request for token by sending Message 1 via channel 2 if BREAKER SYSTEM 2 receives Message 2 after 100ms BREAKER SYSTEM 2 will acquire token |
| | | • BREAKER SYSTEM 2 can close breaker after getting token |

It is to be understood by a person of ordinary skill in the art that various modifications and variations may be made without departing from the scope of the present invention. Therefore, it is intended that the present invention covers such modifications and variations provided they come within the ambit of the appended claims and their equivalents.

## Claims

1. A source change over system having distributed electrical interlocking, the source change over system comprising:
a plurality of switch disconnectors/circuit breakers (304, 306),
interconnections amongst the plurality of switch disconnectors/circuit breakers (304, 306) by one or more communication channels,
in each switch disconnector/circuit breaker (304, 306) an electrical interlock control mechanism adapted to implement a token exchange method,
**characterized in that**
an automatic transfer switch (ATS, 302) is provided for issuing control commands;
the switch disconnectors/circuit breakers (304, 306) are communicatively coupled with the automatic transfer switch (ATS, 302) for tripping actuators for break operation based on the control commands;
every switch disconnector/circuit breaker (304, 306) has a Human Machine Interface (HMI, 308, 312), a field bus communication interface (310, 314) and an input/output interface (318, 320), each for monitoring and controlling the respective switch disconnector/circuit breaker (304, 306)
the communication channels amongst said switch disconnectors/circuit breakers (304, 306) comprise said input/output interfaces (318, 320), and
wherein the plurality of switch disconnectors/circuit breakers are adapted to take decisions of token exchange based on:
the switch disconnector/circuit breaker that intends to close the breaker requires to possess an electrical interlocking token therewith;
the interlocking token is possessed by only one switch disconnector/circuit breaker at a time or the interlocking token is possessed by none of the switch disconnectors/ circuit breaker;
if a switch disconnector/circuit breaker intends to close the breaker and does not possess the electrical interlocking token therewith a request is sent to other switch disconnectors/ circuit breakers to release the interlocking token thereto that requires the token for closing the breaker; and
a switch disconnector/ circuit breaker releases the token to other switch disconnector/ circuit breaker if and only if the breaker of the releasing switch disconnector is in open and not in trip state and no other token request is pending.

2. The source change over system as claimed in claim 1, wherein the automatic transfer switch comprises a programmable logic.

## Patentansprüche

1. Quellenumschaltsystem mit verteilter elektrischer Verriegelung, wobei das Quellenumschaltsystem umfasst:
mehrere Lasttrennschalter/Stromunterbrecher (304, 306),
Verbindungen zwischen den mehreren Lasttrennschaltern/Stromunterbrechern (304, 306) über einen oder mehrere Kommunikationskanäle,
in jedem Lasttrennschalter/Stromunterbrecher (304, 306) einen elektrischen Verriegelungssteuermechanismus, der zur Implementierung eines Token-Austauschverfahrens geeignet ist,
**dadurch gekennzeichnet, dass**
ein automatischer Umschalter (ATS, 302) für die Ausgabe von Steuerbefehlen bereitgestellt ist;
die Lasttrennschalter/Stromunterbrecher (304, 306) kommunikationstechnisch mit dem automatischen Umschalter (ATS, 302) gekoppelt sind, um auf der Grundlage der Steuerbefehle Stellglieder für einen Unterbrechungsvorgang auszulösen;
jeder Lasttrennschalter/Stromunterbrecher (304, 306) eine Mensch-Maschine-Schnittstelle (HMI, 308, 312), eine Feldbus-Kommunikationsschnittstelle (310, 314) und eine Eingangs-/Ausgangsschnittstelle (318, 320), jeweils zur Überwachung und Steuerung des jeweiligen Lasttrennschalters/Stromunterbrechers (304, 306) aufweist,
die Kommunikationskanäle zwischen den Lasttrennschaltern/Stromunterbrechern (304, 306) die Eingangs-/Ausgangsschnittstellen (318, 320) umfassen, und
wobei die mehreren Lasttrennschalter/Stromunterbrecher so ausgelegt sind, dass sie Entscheidungen über einen Token-Austausch basierend darauf treffen, dass:
der Lasttrennschalter/Stromunterbrecher, der den Unterbrecher schließen soll, im Besitz eines elektrischen Verriegelungstokens sein muss;
das Verriegelungstoken sich zu jedem Zeitpunkt jeweils im Besitz nur eines Lasttrennschalters/Stromunterbrechers befindet oder sich das Verriegelungstoken im Besitz von keinem der Lasttrennschalter/Stromunterbrecher befindet;
wenn ein Lasttrennschalter/Stromunterbrecher den Unterbrecher schließen soll und sich nicht im Besitz des elektrischen Verriegelungstokens befindet, eine Anforderung an andere Lasttrennschalter/Stromunterbrecher gesendet wird, das Verriegelungstoken für den Lasttrennschalter/Stromunterbrecher freizugeben, der das Token zum Schließen des Unterbrechers benötigt; und
ein Lasttrennschalter/Stromunterbrecher das Token für einen anderen Lasttrennschalter/Stromunterbrecher dann und nur dann freigibt, wenn sich der Unterbrecher des freigebenden Lasttrennschalters in einem geöffneten und nicht in einem Auslösezustand befindet und keine andere Token-Anforderung anhängig ist.

2. Quellenumschaltsystem nach Anspruch 1, wobei der automatische Umschalter eine programmierbare Logik umfasst.

## Revendications

1. Système de changement de source présentant un verrouillage mutuel électrique distribué, le système de changement de source comprenant :
une pluralité de sectionneurs/disjoncteurs (304, 306),
des interconnexions entre la pluralité de sectionneurs/disjoncteurs (304, 306) par un ou plusieurs canaux de communication,
dans chaque sectionneur/disjoncteur (304, 306), un mécanisme de commande de verrouillage mutuel électrique adapté à mettre en œuvre un procédé d'échange de jeton,
**caractérisé en ce que**
un commutateur de transfert automatique (ATS, 302) est prévu pour émettre des instructions de commande ;
les sectionneurs/disjoncteurs (304, 306) sont couplés de manière communicative avec le commutateur de transfert automatique (ATS, 302) pour déclencher des actionneurs pour une opération de coupure sur la base des instructions de commande ;
chaque sectionneur/disjoncteur (304, 306) présente une interface homme-machine (IHM, 308, 312), une interface de communication par bus de terrain (310, 314) et une interface d'entrée/sortie (318, 320), chacune pour surveiller et commander le sectionneur/disjoncteur respectif (304, 306),
les canaux de communication entre lesdits sectionneurs/disjoncteurs (304, 306) comprennent lesdites interfaces d'entrée/sortie (318, 320) et
dans lequel la pluralité de sectionneurs/disjoncteurs sont adaptés à prendre des décisions d'échange de jeton sur la base de ce qui suit :
le sectionneur/disjoncteur qui a l'intention de fermer le disjoncteur doit posséder un jeton de verrouillage mutuel électrique ;
le jeton de verrouillage mutuel est possédé par un seul sectionneur/disjoncteur à la fois ou le jeton de verrouillage mutuel n'est possédé par aucun des sectionneurs/disjoncteurs ;
si un sectionneur/disjoncteur a l'intention de fermer le disjoncteur et ne possède pas le jeton de verrouillage mutuel électrique, une demande est envoyée à d'autres sectionneurs/disjoncteurs afin de libérer le jeton de verrouillage mutuel pour celui qui requiert le jeton pour fermer le disjoncteur ; et
un sectionneur/disjoncteur libère le jeton pour un autre sectionneur/disjoncteur si et seulement si le disjoncteur du sectionneur libérateur est dans l'état ouvert et non dans l'état de déclenchement et si aucune autre demande de jeton n'est en attente.

2. Système de changement de source selon la revendication 1, dans lequel le commutateur de transfert automatique comprend une logique programmable.
